# EUROPEAN PATENT SPECIFICATION

(11) **EP 2 881 564 B1**
(45) Date of publication and mention of the grant of the patent: **21.09.2016**
(21) Application number: 14196418.9
(22) Date of filing: 04.12.2014
(51) Int. Cl.: F02D 9/10, F16K 27/02

(54) **Throttle valve for an internal combustion engine provided with a metal valve seat overmoulded inside a valve body made of a plastic material**
Drosselklappe für einen Verbrennungsmotor mit einem metallischen, in einen Ventilkörper aus Kunststoffmaterial umspritzten Ventilsitz
Vanne d'étranglement pour un moteur à combustion interne pourvu d'un siège de soupape métallique surmoulé à l'intérieur d'un corps de soupape constituée d'une matière plastique

(30) Priority: 04.12.2013 IT BO20130676
(43) Date of publication of application: 10.06.2015
(73) Proprietor: Magneti Marelli S.p.A., 20011 Corbetta (MI) (IT)
(72) Inventor: Colli, Marcello, 42100 Reggio Emilia (IT); Garofalo, Michele, 86100 Campobasso (IT); Lubrano, Luigi, 28100 Novara (IT); Vutera Cuda, Salvatore, 40019 Sant'Agata Bolognese (IT)
(74) Representative: Maccagnan, Matteo

(56) References cited:
- DE-U1-202013 005 082
- US-A- 6 138 988
- US-A1- 2002 104 501
- US-A1- 2003 030 022

## Description

### TECHNICAL FIELD

The present invention concerns a throttle valve for an internal combustion engine.

### PRIOR ART

In internal combustion engines a throttle valve is normally provided, which is arranged upstream of an intake manifold and regulates the flow rate of the air fed to the cylinders. A typical throttle valve currently marketed has a valve body provided with a tubular feeding duct through which the air taken in by the internal combustion engine flows; the inside of the feeding duct houses a throttle plate, which is splined on a rotatory shaft to rotate between an opening position and a closing position of the feeding duct. The rotation of the throttle plate is controlled by an actuator device normally comprising an electric motor coupled to the shaft of the throttle plate by means of a gear transmission and at least one spring which pushes the shaft of the throttle plate towards the closing position (or rather towards a limp-home position close to the closing position).

In the majority of the throttle valves on the market, the entire valve body is made of metallic material and is monolithic (i.e. formed of one single piece without interruption). To reduce the weight and production cost of a throttle valve, splitting of the valve body into two parts initially separate from each other has been proposed: a first part which comprises the feeding duct (inside which the throttle plate is arranged) and is made of metallic material, and a second part which comprises the support of the electric motor and gear transmission and is made of plastic material; the two parts are produced separately and are then connected together by means of screws. However, the market requires further reductions in weight and production cost of the throttle valve without affecting performance in any way.

In the patent application DE202013005082U1 (and also in the prior art documents WO0031405A2, WO9607041A1 and US6138988B1) a throttle valve is proposed having an annular shaped inner body which is made of a metallic material, defines a central portion of the feeding duct, and is arranged in the area of the shaft so that in a closing position the outer edge of the throttle plate is close to an inner surface of the inner body, and an outer body which is made of a plastic material (typically a technopolymer), encompasses the inner body leaving the inner surface of the inner body visible, and makes up the remaining part of the feeding duct on the opposite sides of the inner body.

The throttle valve described in the patent application DE202013005082U1 is simple and inexpensive to produce (in fact it can be easily made by injection overmoulding of the outer body around the inner body), has an extremely limited weight and production cost (it is almost entirely made of plastic material which is lighter and cheaper than metallic material), and is not negatively affected either by the thermal expansion due to the sudden changes of temperature to which the throttle valve is subject during use, or by ageing (since the two parts that cooperate to close the feeding duct, i.e. the throttle plate and the inner body, are made of the same metallic material and therefore have the same type of behaviour vis-à-vis both thermal variations and ageing).

However, in the throttle valve described in the patent application DE202013005082U1 the feeding duct may not always guarantee an optimal seal in the area of the two annular joints between the inner body and the outer body. In other words, in the area of the two annular joints between the inner body and the outer body, air leaks can occur both from the feeding duct towards the external environment, and from the external environment towards the feeding duct. Said air leaks can be particularly negative because on the one hand they can convey potentially harmful substances (humidity which results in oxidisation or combustion products that can be chemically aggressive) towards the mechanical, electrical and electronic components of the actuator device, and on the other hand can make the throttle valve non-compliant with the specifications of the type-approval standards (for example the Euro 6 standard establishes a relatively low limit for the seal of the feeding duct).

### DISCLOSURE OF THE INVENTION

The object of the present invention is to provide a throttle valve for an internal combustion engine, said throttle valve being free from the drawbacks described above and, at the same time, also easy and inexpensive to produce.

According to the present invention a throttle valve is provided for an internal combustion engine, according to the attached claims.

### BRIEF DESCRIPTION OF THE DRAWINGS

The present invention will now be described with reference to the accompanying drawings, which illustrate a non-limiting embodiment example thereof, in which:
- figure 1 is a perspective view, partially exploded and with parts removed for clarity, of a throttle valve produced according to the present invention;
- figure 2 is a front view with parts removed for clarity of the throttle valve of figure 1, highlighting an actuator device which controls the position of a throttle plate;
- figure 3 is a perspective view, partially in section with the removal of parts for clarity of the throttle valve of figure 1;
- figure 4 is a longitudinal section view with the removal of parts for clarity of the throttle valve of figure 1;
- figure 5 is a perspective view of an inner metallic body of the throttle valve of figure 1;
- figure 6 is an overhead view of the inner metallic body of figure 5;
- figure 7 is a longitudinal section view of the inner metallic body of figure 5;
- figure 8 is an enlarged scale view of a detail of figure 7; and
- figure 9 is a perspective view of a semi-finished product which is made by extrusion and is used to produce the inner metallic body of figure 5.

### PREFERRED EMBODIMENTS OF THE INVENTION

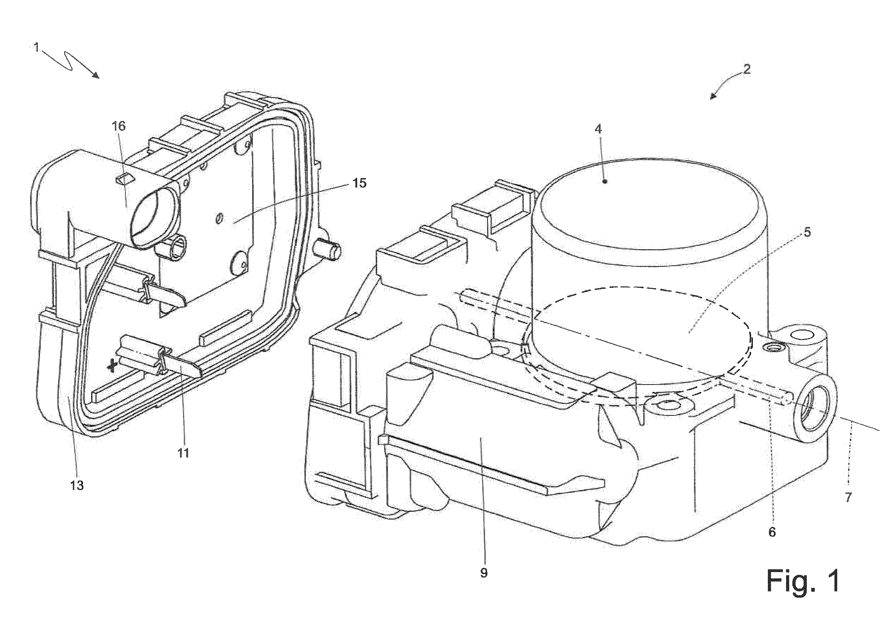

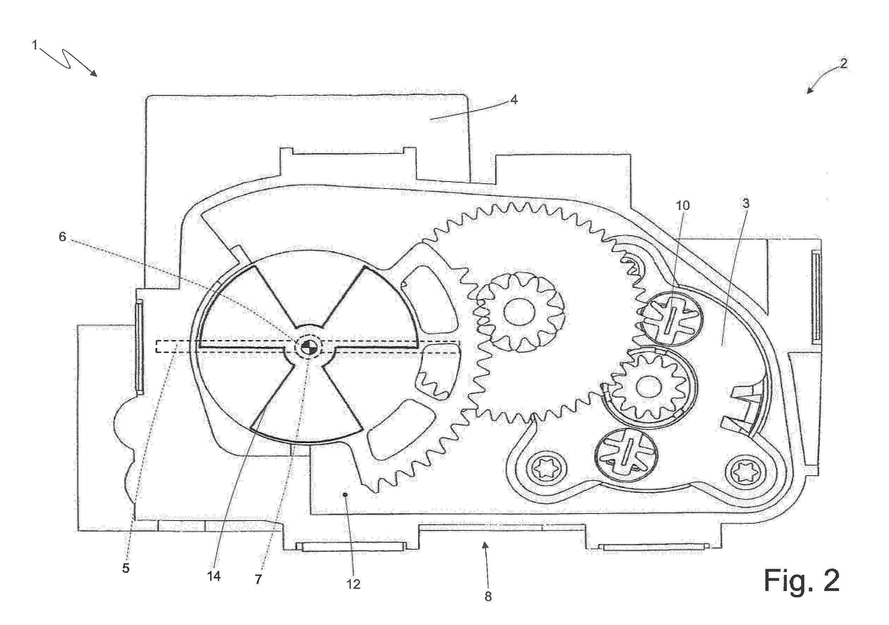

In figures 1 and 2, the number 1 indicates as a whole an electronically controlled throttle valve for an internal combustion engine (not illustrated). The throttle valve 1 comprises a valve body 2 housing an actuator device provided with an electric motor 3 (illustrated in figure 2), a tubular feeding duct 4 with circular section through which the air taken in by the internal combustion engine flows, and a throttle plate 5 (illustrated schematically by the broken line), which is circular in shape, engages the feeding duct 4 and rotates between an opening position and a closing position of the feeding duct 4 due to the action of the actuator device. The throttle plate 5 is splined on a shaft 6 having a longitudinal rotation axis 7 to rotate between the opening position and the closing position due to the action of the actuator device.

According to the illustration of figure 2, the actuator device comprises the electric motor 3 which is coupled to the shaft 6 by means of a gear transmission 8, a return spring (not illustrated and coupled to the shaft 6) adapted to rotate the throttle plate 5 towards the closing position, and a counter spring (not illustrated and coupled to the shaft 6) adapted to rotate the throttle plate 5 against the action of the return spring and towards a partially open position (or limp-home position) defined by a striker body (not illustrated).

The electric motor 3 has a cylindrical body, which is arranged in a tubular housing 9 (illustrated in figure 1) of the valve body 2 arranged beside the feeding duct 4 and is kept in a given position within the tubular housing 9 by a metallic plate provided with a pair of female electric connectors 10 (illustrated in figure 2), which are electrically connected to the electric motor 3 and are adapted to be engaged by a pair of respective male electric connectors 11 (illustrated in figure 1).

The gear transmission 8 is arranged in a chamber 12 (illustrated in figure 2) of the valve body 2, which is closed by a removable cover 13 (illustrated in figure 1).

According to the illustrations of figures 1 and 2, the throttle valve 1 comprises a contactless type inductive position sensor, which is coupled to the shaft 6 and is adapted to detect the angular position of the shaft 6 and, therefore, of the throttle plate 5 to allow a feedback control of the position of the throttle plate 5. The position sensor comprises a rotor 14 (illustrated in figure 2) integral with the shaft 6 and a stator 15 (illustrated in figure 1) supported by the cover 13 and in use arranged facing the rotor 14.

According to the illustration of figure 1, the cover 13 is provided with a female electrical connector 16, which comprises a series of electrical contacts (not illustrated in detail): two electrical contacts are connected to the male electrical connectors 11 adapted to power the electric motor 3, while the other electrical contacts are connected to the stator 15 of the position sensor.

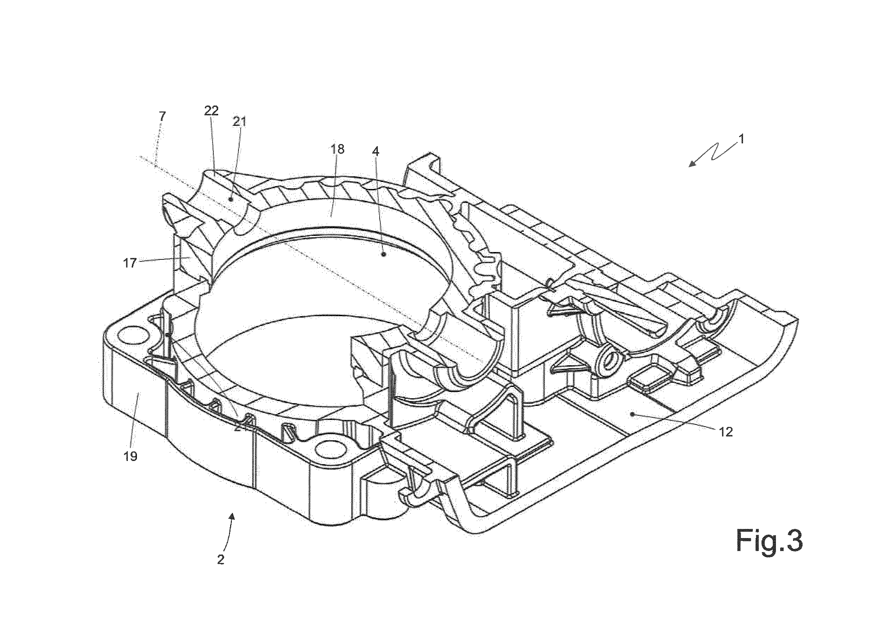

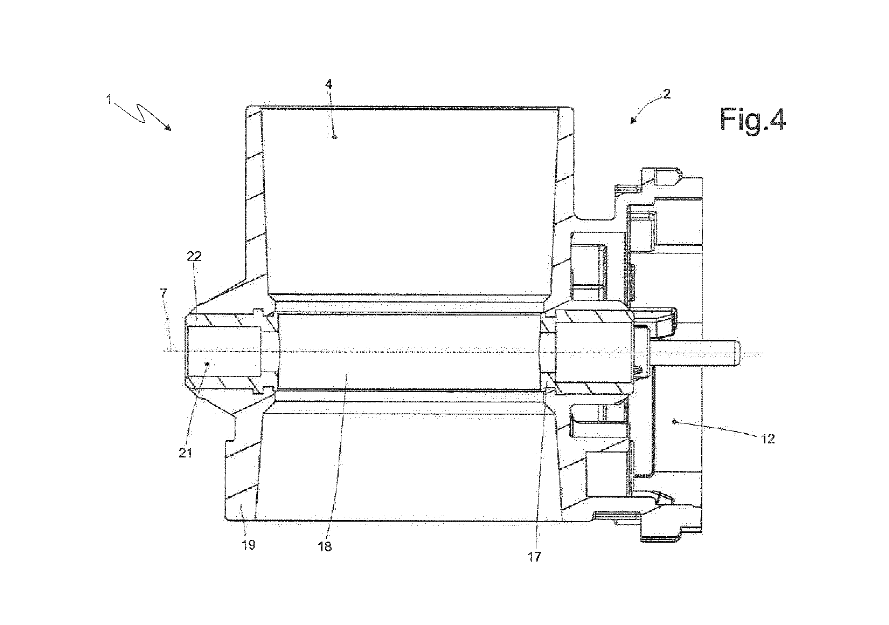

According to the illustrations of figures 3 and 4, the valve body 2 comprises an annular inner body 17 which is made of a first material, defines a central portion of the feeding duct 4 and is arranged in the area of the shaft 6 of the throttle plate 5 so that in the closing position of the feeding duct 4 the outer edge of the throttle plate 5 is close to (rests on) an inner surface 18 of the inner body 17. Furthermore, the valve body 2 comprises an outer body 19 which is made of a second material different from the first material, encompasses the inner body 17 leaving visible (i.e. free, not covered) the inner surface 18 of the inner body 17, and makes up the remaining part of the feeding duct 4 on the opposite sides of the inner body 17. In other words, the inner body 17 is almost completely surrounded by (embedded in) the outer body 19 which leaves free (i.e. visible, or not covered) only the inner surface 18 of the inner body 17 against which the outer edge of the throttle plate 5 rests in the closing position of the feeding duct 4.

In particular, the outer body 19 comprises, among other things, the tubular housing 9 which is arranged beside the feeding duct 4 and houses the electric motor 3 and the chamber 12, which houses the gear transmission 8 and is closed by the removable cover 13.

According to a preferred embodiment, the first material that makes up the inner body 17 is a metallic material (for example, aluminium) and the second material that makes up the outer body 19 is a plastic material (for example a technopolymer loaded with fibreglass). Preferably, the second material that makes up the outer body 19 is injection overmoulded around the inner body 17.

Preferably, the throttle plate 5 is made of the same first metallic material that composes the inner body 17; alternatively the throttle plate 5 is made of a metallic material which is different from the first metallic material that composes the inner body 17 but has a thermal behaviour similar to the first metallic material which composes the inner body 17 (or both the materials have substantially the same thermal expansion coefficient). In this way, the two parts that cooperate to close the feeding duct 4 (i.e. the throttle plate 5 and the inner body 17 arranged in the area of the rotation axis 7 of the throttle plate 5) are made of the same material (or in any case are both made of similar metallic materials) and therefore have substantially the same type of behaviour vis-à-vis both thermal variations and ageing.

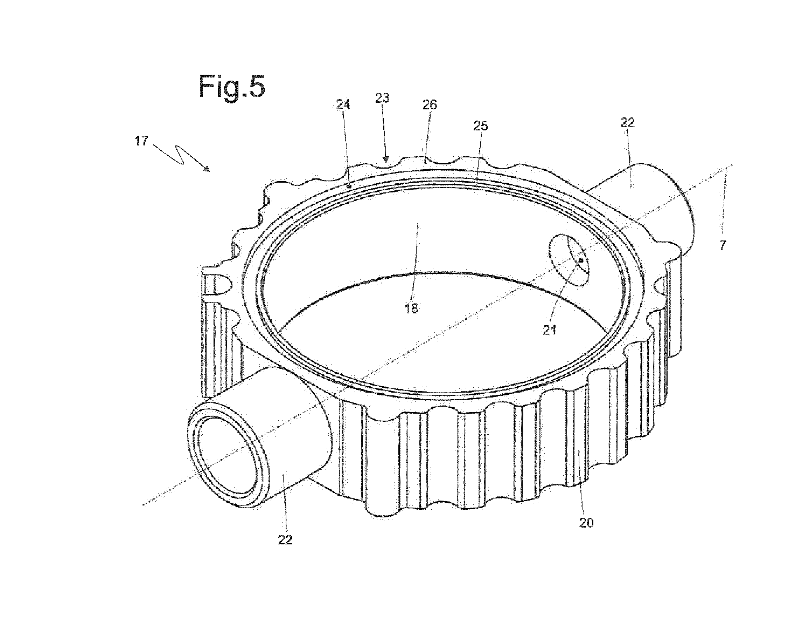

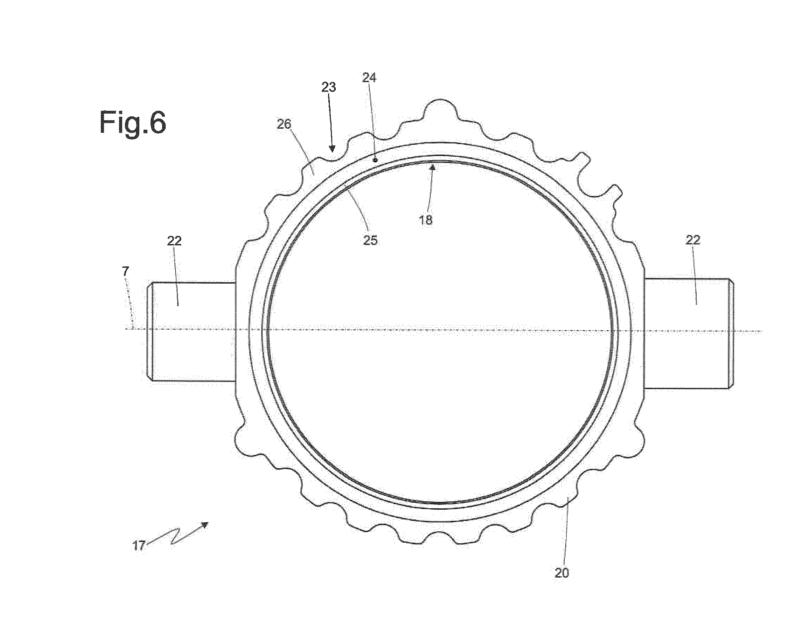

According to a preferred embodiment illustrated in figures 5 and 6, the inner body 17 is provided with a plurality of holding (i.e. retaining, blocking) ribs 20 which project from an outer surface and are encompassed inside the outer body 19. According to alternative embodiments not illustrated, the holding ribs 20 are not present or have different forms.

According to the illustrations of figures 3-5 and 7, the inner body 17 has two through holes 21, which are symmetrically arranged on opposite sides of the inner body 17, are coaxial with the rotation axis 7 and are run through by the shaft 6; in other words, the function of the through holes 21 is to allow the passage of the shaft 6 through the inner body 17.

According to a preferred embodiment, the inner body 17 has two tubular appendages 22, which are symmetrically arranged on opposite sides of the inner body 17, are coaxial with the rotation axis 7 (or are arranged in the area of the through holes 21), project in a radial direction towards the outside of the inner body 17 and house corresponding bearings (known and not illustrated) of the shaft 6. The tubular appendages can also house axial centring bushes (known and not illustrated) of the shaft 6, or elements that guarantee the correct axial position of the shaft 6 (and, obviously, of the throttle plate 5 borne by the shaft 6); alternatively, the axial centring bearings and/or bushes of the shaft 6 are housed within the outer body 19. According to a different embodiment not illustrated, the inner body 17 is without the two tubular appendages 22; consequently, the housings for the bearings of the shaft 6 (and, obviously, of the axial centring bushes) are obtained in the outer body 19.

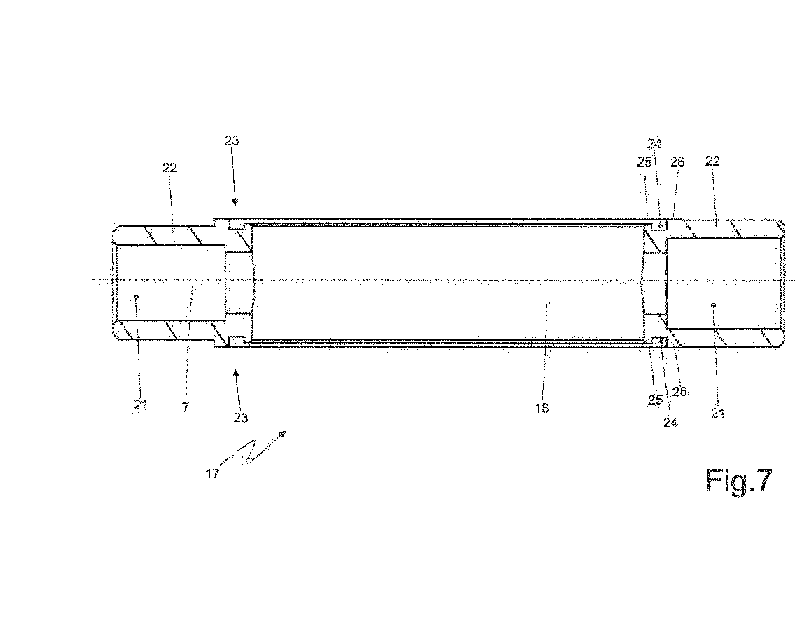

According to the illustrations of figures 5-8, the inner body 17 has two annular walls 23 (visible together only in figure 7) which are axially opposite each other and each of which surrounds the feeding duct 4 (in other words, the two annular walls 23 are arranged axially offset one above the other to delimit in an axial direction the inner body 17).

Each annular wall 23 of the inner body 17 is provided with a groove 24 obtained in the middle of the annular wall 23; i.e. each annular wall 23 of the inner body 17 is centrally hollowed out to obtain a corresponding groove 24 (obviously also annular).

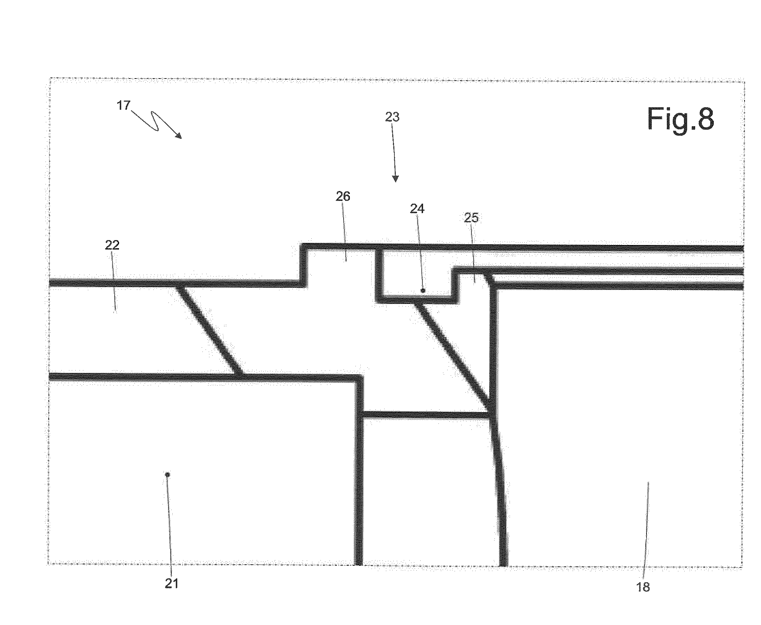

As better illustrated in figure 8, each groove 24 is delimited on one side by an inner edge 25 with a smaller diameter (i.e. arranged inside the groove 24) and on the other side by an outer edge 26 with a larger diameter (i.e. arranged outside the groove 24). According to a preferred embodiment, in each groove 24 the inner edge 25 has a height measured in an axial direction smaller than the outer edge 26 (i.e. the inner edge 25 is axially lower than the outer edge 26). According to a preferred embodiment, in each groove 24 the inner edge 25 has a thickness measured in a radial direction smaller than the outer edge 26 (i.e. the inner edge 25 is radially thinner than the outer edge 26). Lastly, according to a preferred embodiment, each groove 24 has a thickness measured in a radial direction larger than the inner edge 25 (i.e. each groove 24 is radially thicker than the inner edge 25).

Obviously, and as well illustrated in figure 4, a part of the outer body 19 penetrates inside each groove 24 completely filling said groove 24.

In the embodiment illustrated in the attached figures, each annular wall 23 of the inner body 17 is provided with one single groove 24; according to alternative embodiments not illustrated, each annular wall 23 of the inner body 17 is provided with two or more grooves 24 arranged concentrically one inside the other (or, from another point of view, arranged concentrically one outside the other).

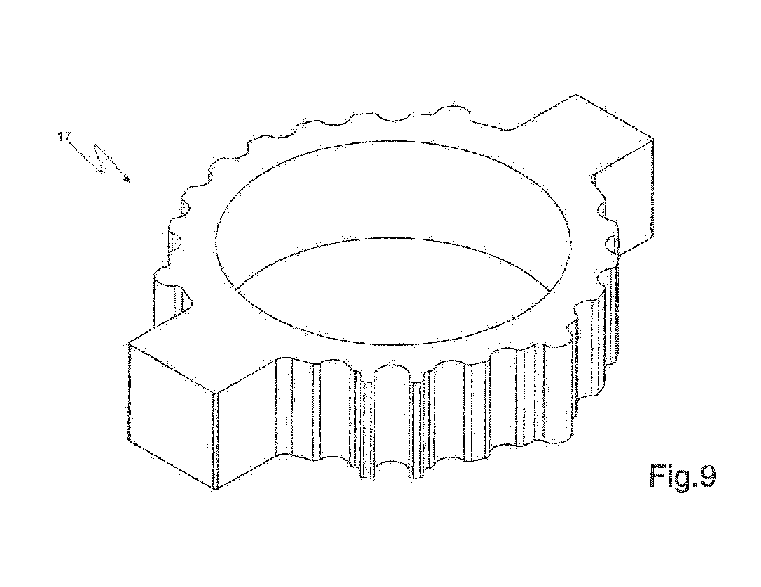

The inner body 17 can be produced starting from a rough semi-finished product made by means of casting (normally diecasting) which is subsequently machined with removal of material. Alternatively, the inner body 17 can be produced by starting from a rough semi-finished product made by means of extrusion which is subsequently machined with removal of material; figure 9 illustrates an example of a rough semi-finished product made by means of extrusion from which the inner body 17 is subsequently obtained (said semi-finished product is obtained by "slicing" a corresponding extruded bar).

The throttle valve 1 described above has numerous advantages.

Firstly, each groove 24 (into which the outer body 19 penetrates, completely filling said groove 24) constitutes a "labyrinth" which makes the path more difficult for the gases which penetrate inside the feeding duct 4 or flow out of the feeding duct 4 in the area of the annular joints between the inner body 17 and the outer body 19 (particularly passing around the tubular appendages 22). In other words, the presence of the groove 24 allows a more effective pneumatic seal to be obtained which significantly reduces the passage of gas in the area of the annular joints between the inner body 17 and the outer body 19 (particularly passing around the tubular appendages 22).

The fact that in each annular wall 23 the inner edge 25 is radially narrower than the groove 24 and than the outer edge 26 and is axially lower than the outer edge 26, allows improvement of the seal effect of the groove 24, i.e. it allows the permeability to gases of the corresponding annular joint between the inner body 17 and the outer body 19 to be reduced.

Furthermore, due to its configuration the seal effect of each groove 24 is maintained even in the case of different expansions (due to temperature variations and/or ageing) of the outer body 19 with respect to the inner body 17. In other words, even if the outer body 19 expands differently from the inner body 17 (following temperature variations and/or ageing), the grooves 24 nevertheless maintain their seal capacity almost unchanged.

Lastly, the inner body 17 of the throttle valve 1 described above is simple and easy to produce, since each groove 24 can be easily made for example by means of machining with removal by milling.

## Claims

1. A throttle valve (1) for an internal combustion engine; the throttle valve (1) comprises:
a valve body (2);
a tubular feeding duct (4), which is defined in the valve body (2) and through which the air taken in by the internal combustion engine flows; and
a throttle plate (5), which is arranged inside the feeding duct (4) and is splined to a shaft (6), which is mounted in a rotatory manner, so as to rotate around a rotation axis (7) between a maximum opening position and a closing position to open and close the feeding duct (4);
wherein the valve body comprises an annular-shaped inner body (17), which is made of a first material, defines a central portion of the feeding duct (4), and is arranged in correspondence to the shaft (6) of the throttle plate (5), so that, in the closing position to close the feeding duct (4),
the outer edge (26) of the throttle plate (5) is close to an inner surface (18) of the inner body (17);
wherein the valve body comprises an outer body (19), which is made of a second material that is different from the first material, encompasses the inner body (17) leaving the inner surface (18) of the inner body (17) visible, and makes up the remaining part of the feeding duct (4) on the opposite sides of the inner body (17); and
wherein the inner body (17) has two axially opposite annular walls (23), each of which surrounds the feeding duct (4);
each annular wall (23) of the inner body (17) is provided with at least one groove (24), which is obtained in the middle of the annular wall (23);
the throttle valve is **characterized in that**:
each groove (24) is delimited, on one side, by an inner edge (25) with a smaller diameter and, on the other side, by an outer edge (26) with a larger diameter; and
in each groove (24), the inner edge (25) has a height that,
when measured in an axial direction, is smaller than the height of the outer body (26).

2. A throttle valve (1) according to claim 1, wherein, in each groove (24), the inner edge (25) has a thickness that, when measured in a radial direction, is smaller than the thickness of the outer edge (26).

3. A throttle valve (1) according to claim 1 or 2, wherein each groove (24) has a width that, when measured in a radial direction, is larger than the thickness of the inner edge (25).

4. A throttle valve (1) according to any of the claims from 1 to 3, wherein part of the outer body (19) penetrates into each groove (24), thus completely filling the groove (24).

5. A throttle valve (1) according to any of the claims from1 to 4, wherein the throttle plate (5) is made of the same first material that makes up the inner body (17).

6. A throttle valve (1) according to any of the claims from 1 to 5, wherein the second material that makes up the outer body (19) is overmoulded around the inner body (17).

7. A throttle valve (1) according to any of the claims from 1 to 6, wherein the inner body (17) is provided with a plurality of holding ribs (20), which project from an outer surface opposite to the inner surface (18) and are encompassed inside the outer body (19).

8. A throttle valve (1) according to any of the claims from 1 to 7, wherein the inner body (17) has two through holes (21), which are symmetrically arranged on opposite sides of the inner body (17), are coaxial to the rotation axis (7), and are run through by the shaft (6).

9. A throttle valve (1) according to any of the claims from 1 to 8, wherein the inner body (17) has two tubular appendages (22), which are symmetrically arranged on opposite sides of the inner body (17), are coaxial to the rotation axis (7), radially project towards the outside of the inner body (17), and house corresponding bearings of the shaft (6).

## Patentansprüche

1. Drosselklappe (1) für einen Verbrennungsmotor, welche Drosselklappe (1) enthält:
einen Ventilkörper (2);
eine rohrförmige Zulieferleitung (4), die in dem Ventilkörper (2) gebildet ist und durch welche die von dem Verbrennungsmotor angesaugte Luft strömt; und
eine Drosselplatte (5), die innerhalb der Zulieferleitung (4) angeordnet ist und an einer Welle (6) verkeilt ist, welche drehbar dergestalt angebracht ist, dass sie sich um eine Drehachse (7) zwischen einer maximalen Öffnungsposition und einer Schließposition dreht, um die Zulieferleitung (4) zu öffnen und zu schließen;
wobei der Ventilkörper einen ringförmigen inneren Körper (17) aufweist, der aus einem ersten Material hergestellt ist, einen zentralen Teil der Zulieferleitung (4) bildet und in Übereinstimmung mit der Welle (6) der Drosselplatte (5) angeordnet ist, sodass in der Schließposition, in der die Zulieferleitung (4) geschlossen ist, der äußere Rand (26) der Drosselplatte (5) nahe an einer Innenfläche (18) des inneren Körpers (17) liegt;
wobei der Ventilkörper einen äußeren Körper (19) aufweist, der aus einem zweiten Material hergestellt ist, das von dem ersten Material verschieden ist, den inneren Körper (17) umschließt, wobei die Innenfläche (18) des inneren Körpers (17) sichtbar bleibt, und den verbleibenden Teil der Zulieferleitung (4) auf den gegenüberliegenden Seiten des inneren Körpers (17) bildet;
und
wobei der innere Körper (17) zwei axial entgegengesetzte ringförmige Wände (23) hat, die jeweils die Zulieferleitung (4) umgeben;
wobei jede ringförmige Wand (23) des inneren Körpers (17) mit mindestens einer Nut (24) versehen ist, die in der Mitte der ringförmigen Wand (23) erhalten wird;
welche Drosselklappe **dadurch gekennzeichnet ist, dass**:
jede Nut (24) auf einer Seite durch einen Innenrand (25) mit einem kleineren Durchmesser und auf der anderen Seite durch einen Außenrand (26) mit einem größeren Durchmesser begrenzt ist; und
in jeder Nut (24) der Innenrand (25) eine Höhe hat, die in einer axialen Richtung gemessen kleiner ist als die Höhe des äußeren Körpers (26).

2. Drosselklappe (1) nach Anspruch 1, wobei in jeder Nut (24) der Innenrand (25) eine Dicke hat, die in einer radialen Richtung gemessen kleiner ist als die Dicke des Außenrandes (26).

3. Drosselklappe (1) nach Anspruch 1 oder 2, wobei jede Nut (24) eine Breite hat, die in einer radialen Richtung gemessen größer ist als die Dicke des Innenrandes (25).

4. Drosselklappe (1) nach einem der Ansprüche von 1 bis 3, wobei ein Teil des äußeren Körpers (19) in jede Nut (24) eindringt, sodass er die Nut (24) vollständig füllt.

5. Drosselklappe (1) nach einem der Ansprüche von 1 bis 4, wobei die Drosselplatte (5) aus demselben ersten Material hergestellt ist, das den inneren Körper (17) bildet.

6. Drosselklappe (1) nach einem der Ansprüche von 1 bis 5, wobei das zweite Material, das den äußeren Körper (19) bildet, um den inneren Körper (17) umspritzt ist.

7. Drosselklappe (1) nach einem der Ansprüche von 1 bis 6, wobei der innere Körper (17) mit einer Vielzahl von Halterippen (20) versehen ist, die von einer der Innenfläche (18) entgegengesetzten Außenfläche vorspringen und innerhalb des äußeren Körpers (19) umschlossen sind.

8. Drosselklappe (1) nach einem der Ansprüche von 1 bis 7, wobei der innere Körper (17) zwei Durchgangslöcher (21) hat, die auf entgegengesetzten Seiten des inneren Körpers (17) symmetrisch angeordnet sind, mit der Drehachse (7) koaxial sind und durch welche die Welle (6) verläuft.

9. Drosselklappe (1) nach einem der Ansprüche von 1 bis 8, wobei der innere Körper (17) zwei rohrförmige Ansätze (22) hat, die auf entgegengesetzten Seiten des inneren Körpers (17) symmetrisch angeordnet sind, zu der Drehachse (7) koaxial sind, zur Außenseite des inneren Körpers (17) radial vorspringen und entsprechende Lager der Welle (6) aufnehmen.

## Revendications

1. Vanne d'étranglement (1) pour un moteur à combustion interne ; la vanne d'étranglement (1) comprenant :
un corps de vanne (2) ;
un conduit d'alimentation tubulaire (4) qui est défini dans le corps de vanne (2) et à travers lequel l'air prélevé par le moteur à combustion interne s'écoule ; et
une plaque d'étranglement (5) qui est agencée à l'intérieur du conduit d'alimentation (4) et est cannelée sur un arbre (6), qui est monté d'une manière rotative, afin de tourner autour d'un axe de rotation (7) entre une position d'ouverture maximum et une position de fermeture afin d'ouvrir et fermer le conduit d'alimentation (4) ;
dans laquelle le corps de vanne comprend un corps interne de forme annulaire (17) qui est réalisé avec un premier matériau, définit une position centrale du conduit d'alimentation (4) et est agencé en correspondance de l'arbre (6) de la plaque d'étranglement (5), de sorte que, dans la position de fermeture pour fermer le conduit d'alimentation (4), le bord externe (26) de la plaque d'étranglement (5) est à proximité d'une surface interne (18) du corps interne (17) ;
dans laquelle le corps de vanne comprend un corps externe (19) qui est réalisé avec un second matériau qui est différent du premier matériau, englobe le corps interne (17) laissant la surface interne (18) du corps interne (17) visible, et compose la partie restante du conduit d'alimentation (4) sur les côtés opposés du corps interne (17) ; et
dans laquelle le corps interne (17) a deux parois annulaires axialement opposées (23), dont chacune entoure le conduit d'alimentation (4) ;
chaque paroi annulaire (23) du corps interne (17) est prévue avec au moins une rainure (24) qui est obtenue dans le centre de la paroi annulaire (23) ;
la vanne d'étranglement est **caractérisée en ce que** :
chaque rainure (24) est délimitée, d'un côté, par un bord interne (25) avec un plus petit diamètre et, de l'autre côté, par un bord externe (26) avec un plus grand diamètre ; et
dans chaque rainure (24), le bord interne (25) a une hauteur qui, lorsqu'elle est mesurée dans une direction axiale, est inférieure à la hauteur du corps externe (26).

2. Vanne d'étranglement (1) selon la revendication 1, dans laquelle, dans chaque rainure (24), le bord interne (25) a une épaisseur qui, lorsqu'elle est mesurée dans une direction radiale, est inférieure à l'épaisseur du bord externe (26).

3. Vanne d'étranglement (1) selon la revendication 1 ou 2, dans laquelle chaque rainure (24) a une largeur qui, lorsqu'elle est mesurée dans la direction radiale, est supérieure à l'épaisseur du bord interne (25).

4. Vanne d'étranglement (1) selon l'une quelconque des revendications 1 à 3, dans laquelle une partie du corps externe (19) pénètre dans chaque rainure (24), remplissant ainsi totalement la rainure (24).

5. Vanne d'étranglement (1) selon l'une quelconque des revendications 1 à 4, dans laquelle la plaque d'étranglement (5) est réalisée avec le même premier matériau qui compose le corps interne (17).

6. Vanne d'étranglement (1) selon l'une quelconque des revendications 1 à 5, dans laquelle le second matériau qui compose le corps externe (19) est surmoulé autour du corps interne (17).

7. Vanne d'étranglement (1) selon l'une quelconque des revendications 1 à 6, dans laquelle le corps interne (17) est prévu avec une pluralité de nervures de maintien (20), qui font saillie d'une surface externe opposée à la surface interne (18) et sont englobées à l'intérieur du corps externe (19).

8. Vanne d'étranglement (1) selon l'une quelconque des revendications 1 à 7, dans laquelle le corps interne (17) a deux trous débouchants (21) qui sont symétriquement agencés sur les côtés opposés du corps interne (17), sont coaxiaux par rapport à l'axe de rotation (7) et sont traversés par l'arbre (6).

9. Vanne d'étranglement (1) selon l'une quelconque des revendications 1 à 8, dans laquelle le corps interne (17) a deux appendices tubulaires (22) qui sont symétriquement agencés sur les côtés opposés du corps interne (17), sont coaxiaux par rapport à l'axe de rotation (7), font radialement saillie vers l'extérieur du corps interne (17) et logent des paliers correspondants de l'arbre (6).
